# FASCICULE DE BREVET EUROPEEN

(11) **EP 0 737 357 B1**
(45) Date de publication et mention de la délivrance du brevet: **10.05.2000**
(21) Numéro de dépôt: 95935497.8
(22) Date de dépôt: 13.10.1995
(51) Int. Cl.: G21C 7/24

(54) **ALLIAGE A BASE D'ARGENT RENFERMANT DE L'INDIUM ET DU CADMIUM POUR LA REALISATION D'ELEMENTS ABSORBANT LES NEUTRONS ET UTILISATION**
INDIUM- UND CADMIUMHALTIGE SILBERLEGIERUNG ZUM HERSTELLEN VON NEUTRONENABSORBIERENDEN ELEMENTEN UND IHRE VERWENDUNG
SILVER ALLOY CONTAINING INDIUM AND CADMIUM FOR MAKING NEUTRON-ABSORBING ELEMENTS, AND USE THEREOF

(30) Priorité: 02.11.1994 FR 9413085
(43) Date de publication de la demande: 16.10.1996
(73) Titulaire: FRAMATOME, 92400 Courbevoie (FR); COGEMA, F-78141 Velizy Villacoublay (FR)
(72) Inventeur: DEFOORT, Françoise, F-38640 Claix (FR); PILLET, Luc, F-69003 Lyon (FR)
(74) Mandataire: Bouget, Lucien
(86) Numéro de dépôt international: FR9501356
(87) Numéro de publication internationale: WO9614639

(56) Documents cités:
- US-A- 3 074 871
- US-A- 3 923 502
- PATENT ABSTRACTS OF JAPAN vol. 16, no. 68 (P-1314) 19 Février 1992 & JP,A,03 261 894 (MITSUBISHI ATOM POWER IND) 21 Novembre 1991

## Description

L'invention concerne un alliage à base d'argent renfermant de l'indium et du cadmium pour la réalisation d'éléments absorbants les neutrons dans le coeur d'un réacteur nucléaire.

Les réacteurs nucléaires et en particulier les réacteurs nucléaires refroidis par de l'eau sous pression comportent un coeur constitué par des assemblages de combustible de forme prismatique disposés verticalement et de manière juxtaposée. Chacun des assemblages de combustible est constitué par un faisceau de crayons de combustible parallèles entre eux maintenus par une ossature constituée par des grilles-entretoises et des tubes-guides reliés rigidement aux grilles-entretoises qui sont réparties suivant la longueur de l'assemblage de combustible.

Pendant le fonctionnement du réacteur nucléaire, il est nécessaire de disposer de moyens pour régler la puissance fournie par le coeur dans lequel se produisent les réactions de fission dégageant de l'énergie sous forme de chaleur. Il est également nécessaire de disposer de moyens pour arrêter le réacteur nucléaire à la fin d'un cycle de fonctionnement ou dans le cas d'un incident nécessitant un arrêt d'urgence.

Le réglage de la puissance du coeur et l'arrêt du réacteur sont réalisés à partir d'éléments absorbant les neutrons et en particulier d'éléments absorbants qui peuvent être plus ou moins insérés dans le coeur suivant les phases de pilotage ou d'arrêt du réacteur nucléaire.

On utilise en particulier des éléments absorbants qui sont réalisés sous la forme de grappes de crayons qui peuvent être introduits et déplacés à l'intérieur des tubes-guides de certains assemblages de combustible.

Les crayons d'une grappe sont reliés à l'une de leurs extrémités à un support comportant des bras rayonnants et un pommeau de liaison de la grappe à un prolongateur, ce support de grappes étant généralement désigné sous le terme "d'araignée".

Les crayons absorbants des grappes de contrôle et d'arrêt d'un réacteur nucléaire comportent une gaine tubulaire dans laquelle sont empilées des pastilles de matériau absorbant.

Parmi les matériaux absorbants les plus utilisés figurent le carbure de bore B₄C et les alliages ternaires argent, indium, cadmium (AIC).

Suivant l'utilisation des grappes absorbantes, pour la conduite ou l'arrêt du réacteur nucléaire, la constitution des crayons absorbants peut être variable et ces crayons peuvent comporter uniquement des pastilles de B₄C ou d'AIC, à la fois des pastilles de B₄C et d'AIC ou encore des pastilles de matériaux fortement absorbants (B₄C ou AIC par exemple) et des matériaux absorbant plus faiblement les neutrons.

L'un des objectifs poursuivis lors de la conception des crayons des grappes absorbantes d'un réacteur nucléaire est de prolonger le plus possible la durée de vie des grappes, de manière à diminuer le plus possible les coûts d'exploitation du réacteur nucléaire.

La durée de vie des grappes de commande et d'arrêt d'un réacteur nucléaire est généralement exprimée en nombre de cycles, chacun des cycles correspondant à une durée de fonctionnement du réacteur nucléaire entre deux opérations de rechargement des assemblages du coeur.

La durée de vie des grappes absorbantes d'un réacteur nucléaire est limitée du fait de l'apparition et du développement, au cours du fonctionnement du réacteur nucléaire, de fissures traversant la gaine des crayons renfermant les pastilles de matériau absorbant et du gonflement du matériau absorbant.

Du fait du développement de ces fissures, il est nécessaire d'éliminer et de mettre au rebut des grappes, après un certain temps d'utilisation dans le réacteur nucléaire.

Les pastilles de matériau absorbant présentent un diamètre nominal, lors de leur chargement dans les gaines, qui est inférieur au diamètre intérieur nominal de la gaine. Il subsiste donc un certain jeu entre la surface latérale des pastilles et la surface intérieure de la gaine d'un crayon absorbant sortant de fabrication. Les pastilles absorbantes sont maintenues à l'intérieur de la gaine par des bouchons de fermeture des extrémités de la gaine et par un ressort hélicoïdal intercalé entre l'un des bouchons de fermeture de la gaine et l'extrémité correspondante de la colonne de pastilles absorbantes.

Le volume intérieur de la gaine qui est fermé de manière totalement étanche par les bouchons peut être rempli par un gaz sous pression.

Les pastilles de matériau absorbant subissent, dans le réacteur en fonctionnement, un gonflement se traduisant en particulier par une dilatation radiale de la pastille ainsi qu'un tassement dû au fluage, de sorte que le jeu entre la surface latérale extérieure de la pastille et la surface intérieure de la gaine tend à diminuer, lorsque le crayon absorbant est exposé aux conditions régnant dans le réacteur nucléaire et en particulier au flux de neutrons à l'intérieur du coeur.

Au bout d'un certain temps d'utilisation des crayons absorbants, le jeu entre les pastilles et la gaine devient nul et les pastilles commencent alors à exercer une poussée notamment dans des directions radiales sur la gaine entraînant sa déformation par expansion radiale.

Dans le cas de l'utilisation d'un alliage argent-indium-cadmium (AIC) comme matériau absorbant, par exemple sous forme de pastilles, l'expansion diamétrale des pastilles est due en partie au gonflement du matériau, sous l'effet de l'irradiation, c'est-à-dire du fait de l'action des neutrons sur le matériau à l'intérieur du coeur du réacteur nucléaire.

Le gonflement dû à l'irradiation de l'AIC a lui-même pour origine les transmutations des éléments de l'alliage par les neutrons et les déplacements d'atomes dans le réseau de l'alliage, sous l'effet du bombardement neutronique qui se traduisent par la création de défauts tels que des lacunes, des boucles de dislocations ou des cavités.

Les transmutations des éléments de l'alliage concernent l'argent qui se transforme en cadmium et l'indium qui se transforme en étain sous l'effet des neutrons épithermiques dont l'énergie est comprise entre 0,625 et 8 eV.

Du fait de la différence de volume des atomes des élément en présence, il se produit une dilatation volumique de la maille cubique à faces centrées (fcc) de l'alliage argent-indium-cadmium.

D'autre part, l'augmentation de la concentration globale en éléments cadmium, indium et étain dans l'alliage, du fait des transmutations, se traduit, lorsque la limite de solubilité des éléments d'alliage dans l'argent cubique à faces centrées est atteinte puis dépassée, par l'apparition d'une seconde phase ayant une structure hexagonale compacte (hcp). Cette phase hexagonale compacte occupe un volume plus important que celui de la phase cubique à faces centrées de départ.

Les alliages AIC utilisés jusqu'ici de manière habituelle pour constituer des éléments absorbants les neutrons dans le coeur d'un réacteur nucléaire renferment, en pourcentages atomiques, 14 à 14,5 % d'indium, 4,6 à 5,15 % de cadmium, le reste de l'alliage étant constitué par de l'argent, à l'exception d'impuretés inévitables en quantité très faible.

De tels alliages selon l'art antérieur, lorsqu'ils sont utilisés pour constituer le matériau absorbant de grappes de réglage à forte antiréactivité d'un réacteur nucléaire refroidi et modéré par de l'eau sous pression, qui sont fréquemment insérées dans le coeur du réacteur nucléaire subissent un gonflement.

Jusqu'ici, les solutions adoptées pour allonger la durée de vie des grappes de réglage fréquemment insérées dans le coeur du réacteur n'ont pas tenu compte de l'effet de la transformation de la phase cubique à faces centrées en phase hexagonale compacte sur le gonflement du matériau absorbant. En conséquence, on n'a jamais proposé jusqu'ici d'ajustement de composition des alliages AIC permettant de retarder l'apparition de la phase hexagonale compacte dans le matériau absorbant, au cours de son utilisation dans le coeur du réacteur nucléaire.

Dans le US-A-3.074.871, on a proposé un élément absorbant les neutrons en un alliage d'argent-indium renfermant éventuellement du cadmium, de l'étain et de l'aluminium. La teneur en indium de l'alliage peut varier dans un intervalle très large de 2 à 20 % en poids et dans tous les exemples donnés relatifs à des alliages ternaires AIC, la teneur en indium des alliages est supérieure à 13,6 % en poids.

Dans le JP-A-03-261894, on a proposé une barre de commande d'un réacteur nucléaire constituée en partie par un alliage AIC renfermant 15 % en poids d'indium.

Le but de l'invention est donc de proposer un alliage à base d'argent renfermant de l'indium et du cadmium pour la réalisation d'éléments absorbants les neutrons dans le coeur d'un réacteur nucléaire qui présente une résistance accrue au gonflement dans le coeur du réacteur et qui permette de réaliser des éléments absorbants dont la durée de vie est sensiblement augmentée.

Dans ce but, l'alliage suivant l'invention renferme, en pourcentages atomiques, 9 à 12 % d'indium et 4 à 5,35 % de cadmium, le reste étant constitué par de l'argent à l'exception d'impuretés inévitables en très faibles quantités.

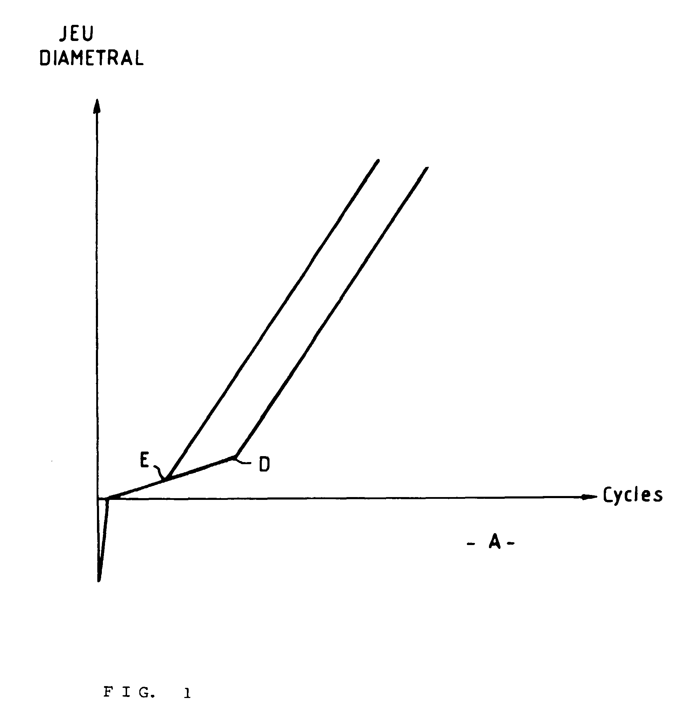

A titre d'illustration non limitative de l'invention, on va décrire, en se référant à la figure jointe en annexe, le comportement sous irradiation de crayons de grappes absorbantes dont le matériau absorbant est constitué au moins partiellement par un alliage suivant l'invention, comparativement à des grappes absorbantes suivant l'art antérieur.

La figure unique est un diagramme représentatif des variations du jeu diamétral entre les pastilles et la gaine d'un crayon d'une grappe absorbante en fonction du nombre de cycles d'utilisation de la grappe dans le coeur d'un réacteur nucléaire à eau sous pression.

La figure est relative à une grappe de réglage comportant des crayons dont le matériau absorbant présente une composition suivant l'invention et comparativement à une grappe dont le matériau absorbant est réalisé suivant l'art antérieur.

On élabore un alliage suivant l'invention par des méthodes métallurgiques classiques dans le cas des alliages AIC.

Pour la mise en oeuvre des exemples de réalisation qui seront décrits, on a élaboré un alliage selon l'invention renfermant en pourcentages atomiques, 9,5 % d'indium et 4,85 % de cadmium, le reste de l'alliage étant constitué par de l'argent, à l'exception d'impuretés inévitables en quantité extrêmement faible.

La composition de l'alliage a été choisie de manière à retarder de manière très substantielle l'apparition de la phase hexagonale compacte pendant l'utilisation de grappes de réglage renfermant du matériau suivant l'invention, dans un réacteur nucléaire à eau sous pression.

La composition de l'alliage a également été choisie de manière à maintenir les caractéristiques d'absorption des neutrons de la grappe à des valeurs proches de celles obtenues avec des grappes renfermant un matériau AIC suivant l'art antérieur.

La composition de l'alliage définie de manière préférentielle est centrée sur 9,5 % d'indium et 4,85 % de cadmium (pourcentages atomiques). Cependant, cette composition peut varier légèreement autour des valeurs centrales avec une amplitude de 0,5 % atomique. La teneur en indium peut donc être comprise etnre 9 et 10 % et la teneur en cadmium entre 4,35 et 5,35 %.

On a également utilisé un matériau suivant l'art antérieur renfermant, en pourcentages atomiques, 14,25 % d'indium et 4,85 % de cadmium qui est élaboré de la même manière que l'alliage suivant l'invention et mis sous forme de pastilles cylindriques ou de barreaux.

Dans le cas de l'alliage suivant l'invention, la diminution du pourcentage de l'indium est compensée par l'augmentation de la teneur en argent qui est proche de 85 % atomiques dans le cas de l'alliage suivant l'invention, alors que cette teneur n'est que de l'ordre de 81 % dans le cas de l'alliage suivant l'art antérieur.

De manière plus générale, la composition des alliages suivant l'invention est définie de la manière décrite ci-dessous en ce qui concerne les éléments indium, cadmium et argent.

### Indium

L'indium doit être en proportion inférieure à 12 % atomiques dans l'alliage suivant l'invention, de manière à retarder l'apparition de la phase hexagonale compacte dans le matériau absorbant sous irradiation.

L'apparition de la phase hexagonale compacte est différée d'autant plus que la teneur en indium est plus faible.

En effet, une étude effectuée par les Demanderesses sur des alliages selon l'art antérieur renfermant entre 14 et 14,50 % atomiques d'indium a montré que l'apparition de la phase hexagonale compacte dans la matrice cubique à faces centrées de l'AIC est retardée, lorsque la proportion d'indium passe du maximum 14,50 % atomiques au minimum 14 % atomiques. Le retard à l'apparition de la phase hexagonale compacte et donc le ralentissement du gonflement sous irradiation et de la fissuration des crayons absorbants est tout-à-fait significatif et permet d'expliquer les différences de durée de vie des grappes absorbantes observées lors de l'exploitation des réacteurs nucléaires à eau sous pression. Cependant, lorsque la teneur en indium reste supérieure à 14 % atomiques, le gain obtenu est trop faible par rapport à la durée d'un cycle pour qu'on oriente la fabrication des alliages AIC selon l'art antérieur vers le bas de l'intervalle des teneurs en indium des compositions habituelles.

Les études effectuées par les sociétés FRAMATOME et COGEMA ont montré qu'un gain appréciable n'est obtenu que pour une teneur en indium inférieure ou égale à 12 % atomiques.

Comme il sera montré plus loin dans les exemples de réalisation, l'un des aspects fondamentaux de l'invention consiste à abaisser la teneur en indium en-dessous de la limite inférieure retenue pour les alliages suivant l'art antérieur et plus précisément à fixer la teneur en indium de manière préférentielle à une valeur proche de 9,5 % atomiques.

En outre, il n'est pas souhaitable d'abaisser la proportion d'indium en-dessous de 9 % atomiques, pour éviter de détériorer les caractéristiques d'absorption neutronique du matériau.

### Cadmium

Le cadmium doit être limité à une teneur inférieure à 5,35 % atomiques, de manière à préserver l'avantage obtenu par la diminution de la teneur en indium en ce qui concerne le retard de l'apparition de la phase hexagonale compacte.

D'autre part, la teneur en cadmium ne doit pas descendre en-dessous de 4 % pour éviter de détériorer les caractéristiques d'absorption neutronique du matériau AIC.

### Argent

L'argent constitue la base de l'alliage et sa teneur est accrue de manière à compenser exactement la diminution de la teneur en indium.

La teneur en argent est donc généralement comprise entre 81 et 87 % atomiques.

On a réalisé des grappes de réglage d'un réacteur nucléaire en utilisant un alliage suivant l'invention à 9,5 % d'indium et 4,85 % de cadmium et un alliage selon l'art antérieur à 14,25 % d'indium et 4,85% de cadmium.

Dans tous les cas, le matériau absorbant est utilisé sous la forme de pastilles cylindriques ayant soit un diamètre de 7,65 mm qui est le diamètre nominal des pastilles de matériau absorbant des grappes selon l'art antérieur (cas des exemples 1 et 2 ci-dessous), soit un diamètre légèrement inférieur de 7,52 mm permettant d'augmenter le jeu entre les pastilles et la gaine des crayons absorbants.

Les pastilles de matériau AIC sont empilées à l'intérieur d'une gaine en acier inoxydable pour constituer la partie inférieure d'une longueur de 0,75 à 1 m d'une grappe de réglage.

Les grappes d'essai ont été utilisées pendant le fonctionnement normal du réacteur nucléaire, comme grappes de réglage fréquemment insérées dans le coeur, au moins dans leur partie inférieure constituée par l'alliage AIC.

Les essais consistent à mesurer l'expansion diamétrale des crayons absorbants de la grappe, à la fin des cycles successifs de fonctionnement du réacteur nucléaire.

Dans le cas des essais réalisés, un cycle de fonctionnement du réacteur nucléaire présente une durée de 300 JEPP (Jour Equivalent Pleine Puissance), c'est-à-dire une durée correspondant à 300 jours d'utilisation à pleine puissance du coeur du réacteur nucléaire.

Les Sociétés demanderesses disposent de techniques permettant de limiter le phénomène de fluage-tassement de l'AIC, de sorte que les essais ont été effectués dans le cas d'un fluage-tassement rapide, dans le cas d'un fluage-tassement lent et dans le cas d'un fluage-tassement à vitesse moyenne.

### Exemple 1

On a constitué des grappes de réglage à partir de pastilles du matériau AIC suivant l'invention à 9,5 % d'indium n'ayant pas subi de traitement de limitation du phénomène de fluage-tassement.

On mesure à la fin de chacun des cycles d'utilisation du réacteur nucléaire d'une durée de 300 JEPP, le gonflement diamétral de la gaine des crayons absorbants des grappes.

On en déduit l'évolution du jeu diamétral entre les pastilles et la gaine. Le jeu diamétral est considéré comme négatif jusqu'au moment où les pastilles viennent en contact avec la gaine, le jeu étant alors nul, puis positif, lorsque la gaine subit un gonflement sous l'effet du gonflement des pastilles qu'elle contient.

On a reporté les résultats d'essais sur la figure sous la forme d'un diagramme donnant le jeu diamétral pastilles-gaine au cours de cycles d'irradiation successifs.

On observe des phases successives dans lesquelles la cinétique d'expansion diamétrale des pastilles est différente.

Dans une première phase correspondant au rattrapage du jeu entre les pastilles et la gaine (zone A), l'expansion diamétrale des pastilles est très rapide.

Dans la phase correspondant à la zone A, l'expansion diamétrale des pastilles est due à la fois au fluage-tassement et au gonflement sous irradiation du matériau absorbant.

Dans une seconde phase se produit le gonflement de la gaine sous l'effet du gonflement sous irradiation des pastilles.

La cinétique de gonflement varie de manière brusque au niveau du point D. Les Sociétés Demanderesses ont pu montrer que cette différence de cinétique est due à l'apparition de la phase hexagonale compacte.

L'apparition de la phase hexagonale est retardée dans le cas de l'alliage suivant l'invention à 9,5 % d'indium par rapport à un alliage classique à 14,25 % d'indium.

On a pu montrer que la transformation de la phase cubique à faces centrées en phase hexagonale compacte est l'élément déterminant qui définit la cinétique de fissuration de la gaine sous irradiation.

Dans le cas d'un alliage suivant l'art antérieur, la phase hexagonale apparaît après un plus faible nombre de cycles (point E). La cinétique de gonflement devient plus rapide après un temps de séjour cumulé plus court à l'intérieur du réacteur nucléaire.

Une fissuration de la gaine peut apparaître, lorsque la gaine a subi un gonflement d'une certaine amplitude.

La cinétique de gonflement de la gaine fissurée est déterminée par la cinétique du fluage-tassement et celle du gonflement sous irradiation du matériau suivant l'invention dont les vitesses s'ajoutent. La vitesse de gonflement est inférieure à la vitesse d'expansion radiale au cours de la première phase, en particulier du fait de l'apparition de la phase hexagonale compacte qui diminue la vitesse de fluage-tassement.

La durée de vie des grappes de réglage comportant un alliage absorbant suivant l'invention est considérablement accrue par rapport à la durée de vie des grappes selon l'art antérieur.

### Exemple 2

On a réalisé des grappes de réglage d'un réacteur nucléaire à eau sous pression à partir de matériau absorbant suivant l'invention à 9,5 % d'indium et à partir de matériau suivant l'art antérieur à 14,25 % d'indium.

De plus, les pastilles en matériau AIC suivant l'invention et les pastilles en matériau AIC ayant une composition suivant l'art antérieur ont subi un traitement permettant de limiter la vitesse du fluage tassement à une valeur moyenne à l'intérieur du coeur du réacteur nucléaire.

On a réalisé, comme dans l'exemple 1, des mesures d'expansion diamétrale des crayons absorbants après chacun des cycles de fonctionnement du réacteur nucléaire.

On a déterminé le jeu diamétral entre les pastilles et la gaine à partir des valeurs d'expansion diamétrale.

Les phases déjà décrites en ce qui concerne l'exemple 1 se retrouvent dans le cas de l'exemple 2, avec toutefois des cinétiques d'expansion diamétrale différentes dans la mesure où la vitesse de fluage-tassement est sensiblement plus faible que dans le cas de l'exemple 1.

Du fait de l'apparition plus tardive de la phase hexagonale dans le cas de l'alliage suivant l'invention, les cinétiques de gonflement par irradiation du matériau suivant l'invention et du matériau suivant l'art antérieur deviennent différentes dès que la transformation commence à se produire dans le matériau suivant l'art antérieur. Cette transformation du matériau suivant l'art antérieur peut se produire au cours de la phase de rattrapage de jeu. Les pastilles viennent alors en contact avec la gaine avec un certain retard dans le cas du matériau selon l'invention.

Dans le cas de l'alliage suivant l'invention traité pour limiter la vitesse de fluage, on obtient un gain sur la durée avant fissuration de la gaine par rapport à un alliage suivant l'art antérieur non traité pour limiter la vitesse du fluage.

La durée de vie de la grappe est sensiblement accrue par rapport au cas du matériau suivant l'art antérieur et par rapport au cas du matériau selon l'invention de l'exemple 1.

Il y a donc un effet additif du choix d'une composition suivant l'invention et du traitement de limitation de la vitesse de fluage-tassement.

### Exemple 3

On a réalisé, en utilisant un alliage absorbant suivant l'invention et en utilisant un alliage absorbant suivant l'art antérieur, des grappes de réglage d'un réacteur nucléaire, de manière à réaliser, comme dans le cas des exemples 1 et 2, une étude comparative du gonflement et de la fissuration des crayons d'une grappe dans le coeur du réacteur nucléaire.

La réalisation des grappes correspond à une nouvelle conception dans laquelle le jeu diamétral entre le matériau absorbant et la gaine est accru, la pression exercée par le ressort de maintien des pastilles est diminuée et l'utilisation d'hélium de remplissage permet de limiter la température de la gaine et des pastilles.

Du fait de l'accroissement du jeu initial entre les pastilles et la gaine, le rattrapage de jeu (zone A) demande une durée sensiblement accrue par rapport au cas de crayons des exemples 1 et 2.

Bien que, dans le cas des crayons des grappes de réglage de l'exemple 3, le traitement du matériau absorbant conduise à une vitesse de fluage moyenne, la durée de la phase de rattrapage de jeu est accrue par rapport au cas des crayons des grappes de réglage selon l'exemple 2.

De plus, l'expansion diamétrale des pastilles, dans le cas de l'alliage suivant l'art antérieur et dans le cas de l'alliage suivant l'invention présente des vitesses différentes dès que la phase hexagonale apparaît dans les pastilles ayant la composition suivant l'art antérieur, ce qui peut se produire pendant la phase de rattrapage de jeu.

De ce fait, le rattrapage du jeu entre les pastilles et la gaine peut être réalisé sur une plus longue durée, en ce qui concerne les pastilles en matériau suivant l'invention.

Après l'apparition différée de la phase hexagonale dans l'alliage suivant l'invention, la cinétique de gonflement des crayons renfermant un matériau absorbant suivant l'invention est sensiblement identique à la cinétique de gonflement dans le cas d'un matériau absorbant suivant l'art antérieur .

Le début de fissuration des gaines de crayons est atteint avec un décalage dans le temps en ce qui concerne l'alliage suivant l'invention par rapport à l'alliage suivant l'art antérieur.

La durée de vie des crayons des grappes de réglage dont le matériau absorbant a une composition suivant l'invention est sensiblement accrue.

Les caractéristiques des crayons limitant le fluage-tassement se combinent à la composition de l'alliage suivant l'invention, pour obtenir une durée de vie très sensiblement accrue.

Dans tous les cas, l'utilisation d'une composition suivant l'invention permet donc de retarder l'apparition de la phase hexagonale compacte, de retarder la fissuration et d'allonger la durée de vie des grappes de réglage. On peut combiner à cette utilisation d'une composition suivant l'invention, d'autres procédés permettant de limiter le gonflement et/ou la fissuration de la gaine.

En particulier, les éléments absorbants en alliage selon l'invention peuvent être disposés, pour constituer des crayons absorbants d'une grappe de réglage d'un réacteur nucléaire, à l'intérieur d'un tube avec un jeu radial accru par rapport au jeu habituellement maintenu autour des pastilles de matériau absorbant des crayons des grappes de commande d'un réacteur nucléaire à eau sous pression. Pour obtenir un effet sensible sur le retard à la fissuration des gaines des crayons absorbants et sur la durée de vie des grappes de réglage, il est nécessaire de prévoir un jeu initial au moins égal à 150 µm. Il est également souhaitable d'accroître l'effet d'un jeu accru sur le retard à la fissuration et sur la durée de vie des grappes en réduisant la force d'appui du ressort sur les pastilles et en assurant le remplissage du volume interne de la gaine par de l'hélium sous une pression suffisante.

Bien entendu, l'invention ne se limite pas aux modes de réalisation qui ont été décrits.

C'est ainsi qu'on peut concevoir des grappes de réglage comportant un matériau absorbant sous forme de pastilles ou sous une autre forme, par exemple sous forme de barreaux, en un alliage argent-indium-cadmium suivant l'invention présentant des caractéristiques géométriques et structurales différentes de celles qui ont été indiquées plus haut.

Il est bien sûr possible d'utiliser l'alliage suivant l'invention comme élément absorbant de grappes différentes des grappes de réglage d'un réacteur nucléaire à eau sous pression.

De manière générale, l'alliage suivant l'invention peut être utilisé pour la réalisation de toute grappe de commande ou d'arrêt d'un réacteur nucléaire et plus généralement pour la réalisation d'éléments absorbants les neutrons d'un type quelconque.

## Revendications

1. Alliage à base d'argent renfermant de l'indium et du cadmium pour la réalisation d'éléments absorbants les neutrons dans le coeur d'un réacteur nucléaire, caractérisé par le fait qu'il renferme en pourcentages atomiques, 9 à 12 % d'indium et 4 à 5,35 % de cadmium, le reste étant constitué par de l'argent, à l'exception d'impuretés inévitables en très faibles quantités.

2. Alliage suivant la revendication 1, caractérisé par le fait qu'il renferme, en pourcentages atomiques, 9 à 10 % d'indium et 4,35 % à 5,35 % de cadmium.

3. Utilisation d'un alliage suivant l'une quelconque des revendications 1 et 2, comme matériau absorbant d'une grappe de réglage d'un réacteur nucléaire à eau sous pression, caractérisé par le fait que le matériau absorbant est réalisé sous la forme de pastilles cylindriques empilées à l'intérieur d'une gaine tubulaire fermée par des bouchons étanches et maintenues en appui l'une sur l'autre avec une certaine pression par un ressort intercalé entre l'un des bouchons de fermeture de la gaine et une extrémité d'un empilement de pastilles à l'intérieur de la gaine.

4. Utilisation suivant la revendication 3, caractérisé par le fait qu'une partie seulement des pastilles de matériau absorbant est réalisée en un alliage selon l'une quelconque des revendications 1 et 2.

5. Utilisation suivant la revendication 4, caractérisé par le fait que les pastilles en alliage selon l'une quelconque des revendications 1 et 2 sont disposées dans une partie d'extrémité de la gaine des crayons absorbants de la grappe destinée à être insérée en premier dans le coeur du réacteur nucléaire.

6. Utilisation suivant l'une quelconque des revendications 3, 4 et 5, caractérisé par le fait que la gaine des crayons absorbants de la grappe est remplie d'hélium sous pression.

7. Utilisation suivant l'une quelconque des revendications 3 à 6, caractérisé par le fait que les pastilles de matériau absorbant présentent un diamètre nominal inférieur au diamètre intérieur nominal de la gaine, de manière qu'il subsiste un jeu diamétral supérieur à 150 pm entre la surface latérale externe des pastilles et la surface intérieure de la gaine, avant que la grappe ne soit introduite dans le coeur du réacteur nucléaire en fonctionnement.

8. Utilisation d'un alliage suivant l'une quelconque des revendications 1 et 2 comme matériau absorbant d'une grappe de réglage d'un réacteur nucléaire, caractérisé par le fait que le matériau absorbant est sous la forme de barreaux.

9. Alliage suivant l'une quelconque des revendications 1 et 2 ayant une vitesse de fluage réduite à une température d'utilisation dans le coeur du réacteur nucléaire, caractérisé par le fait qu'il renferme en pourcentages atomiques, environ 9,5 % d'indium et environ 4,85 % de cadmium, le reste de l'alliage, à l'exception d'impuretés inévitables, étant constitué par de l'argent.

## Patentansprüche

1. Indium- und cadmiumhaltige Silberlegierung zum Herstellen von Neutronen absorbierenden Elementen im Kern eines Kernreaktors,
dadurch gekennzeichnet, daß
die Legierung in Atomprozenten 9 bis 12 % Indium und 4 bis 5,35 % Cadmium enthält, wobei der Rest mit Ausnahme von sehr kleinen Mengen an unvermeidbaren Verunreinigungen durch Silber gebildet wird.

2. Legierung nach Anspruch 1, dadurch gekennzeichnet, daß sie in Atomprozenten 9 bis 10 % Indium und 4,35 bis 5,35 % Cadmium enthält.

3. Verwendung einer Legierung nach einem der Ansprüche 1 oder 2 als Absorptionsmaterial für Regelstäbe eines Druckwasserkernreaktors, dadurch gekennzeichnet, daß die absorbierenden Elemente als zylindrische Pellets gebildet sind, die im Inneren einer röhrenförmigen Hülse aufgestapelt sind, der durch dichte Deckel verschlossen ist, wobei die Pellets mit einem gewissen Druck übereinander festgehalten werden, der durch eine zwischen einem der Schließdeckel der Hülse und einem Ende des Pelletstapels im Inneren der Hülse befindlichen Feder erzeugt wird.

4. Verwendung nach Anspruch 3, dadurch gekennzeichnet, daß nur ein Teil der Pellets mit Absorptionsmaterial aus einem der Ansprüche 1 oder 2 gebildet ist.

5. Verwendung nach Anspruch 4, dadurch gekennzeichnet, daß die Pellets aus Legierungen nach einem der Ansprüche 1 oder 2 in einem Endbereich der Hülse der absorbierenden Stäbe des Bündels angeordnet sind, der als erster in den Kern des Kernreaktors einführbar ist.

6. Verwendung nach einem der Ansprüche 3 bis 5, dadurch gekennzeichnet, daß die Hülse der absorbierenden Stäbe des Bündels mit unter Druck stehendem Helium gefüllt ist.

7. Verwendung nach einem der Ansprüche 3 bis 6, dadurch gekennzeichnet, daß die Pellets aus absorbierendem Material einen kleineren Außendurchmesser aufweisen als der Innendurchmesser der Hülse, so daß ein diametrales Spiel zwischen der seitlichen äußeren Oberfläche der Pellets und der inneren Oberfläche der Hülse von mehr als 150 um vorhanden ist, bevor das Bündel in den Kern des arbeitenden Kernreaktors eingeführt wird.

8. Verwendung einer Verbindung nach einem der Ansprüche 1 oder 2 als absorbierendes Material eines Bündels von Regelstäben eines Kernreaktors, dadurch gekennzeichnet, daß das absorbierende Material stabförmig ist.

9. Legierung nach einem der Ansprüche 1 oder 2 mit einer verringerten Kriechgeschwindigkeit bei einer Betriebstemperatur im Kern des Kernreaktors, dadurch gekennzeichnet, daß die Legierung in Atomprozenten etwa 9,5 % Indium und etwa 4,85 % Cadmium enthält, wobei der Rest mit Ausnahme von sehr kleinen Mengen an unvermeidbaren Verunreinigungen durch Silber gebildet wird.

## Claims

1. Silver alloy containing indium and cadmium for making neutron-absorbing elements in the core of a nuclear reactor, characterised in that said alloy contains in atomic percentages, 9 to 12% of indium and 4 to 5.35% of cadmium, the remainder being made up of silver with the exception of inevitable impurities in very small quantities.

2. Alloy according to claim 1, characterised in that it contains, in atomic percentages, 9 to 10% of indium and 4.35 to 5.35% of cadmium.

3. Use of an alloy according to any of the claims 1 and 2, as absorbing material for a control bundle of a pressurised water nuclear reactor, characterised in that the absorbing material is produced in the form of cylindrical pellets stacked in the interior of a tubular sheath which is sealed by impervious plugs, which pellets are held abutting against each other with a specific pressure by a spring which is intercalated between one of the closure plugs of the sheath and one end of a stack of pellets in the interior of the sheath.

4. Use according to claim 3, characterised in that a part only of the pellets made of absorbing material is produced in an alloy according to any of the claims 1 and 2.

5. Use according to claim 4, characterised in that the pellets made of alloy according to any of the claims 1 and 2 are disposed in an end part of the sheath of the absorbing rods of the bundle which is intended to be inserted first into the core of the nuclear reactor.

6. Use according to any of the claims 3, 4 and 5, characterised in that the sheath of the absorbing rods of the bundle is filled with helium under pressure.

7. Use according to any of the claims 3 to 6, characterised in that the pellets made of absorbing material have a nominal diameter less than the nominal internal diameter of the sheath, such that there is maintained a diametral clearance greater than 150 µm between the external lateral surface of the pellets and the internal surface of the sheath, before the bundle is introduced into the core of the operating nuclear reactor.

8. Use of an alloy according to any of the claims 1 and 2 as absorbing material for a control bundle of a nuclear reactor, characterised in that the absorbing material is in the form of bars.

9. Alloy according to any of the claims 1 and 2 having a reduced creep rate at an operating temperature in the core of the nuclear reactor, characterised in that said alloy contains in atomic percentages, approx. 9.5% of indium and approx. 4.85% of cadmium, the remainder of the alloy, with the exception of inevitable impurities, being made up of silver.
